# EUROPÄISCHE PATENTSCHRIFT

(11) **EP 1 259 731 B1**
(45) Veröffentlichungstag und Bekanntmachung des Hinweises auf die Patenterteilung: **05.04.2006**
(21) Anmeldenummer: 01913587.0
(22) Anmeldetag: 08.02.2001
(51) Int. Cl.: F02P 5/15

(54) **VERFAHREN ZUR STEUERUNG EINER BRENNKRAFTMASCHINE**
METHOD FOR CONTROLLING AN INTERNAL COMBUSTION ENGINE
PROCEDE DE COMMANDE D'UN MOTEUR A COMBUSTION INTERNE

(30) Priorität: 17.02.2000 DE 10007208
(43) Veröffentlichungstag der Anmeldung: 27.11.2002
(73) Patentinhaber: ROBERT BOSCH GMBH, 70442 Stuttgart (DE)
(72) Erfinder: ROTH, Andreas, 75417 Muehlacker-Lomersheim (DE); NICOLAOU, Michael, 71665 Vaihingen, Enz (DE)
(86) Internationale Anmeldenummer: PCT/DE2001/000472
(87) Internationale Veröffentlichungsnummer: WO 2001/061169

(56) Entgegenhaltungen:
- EP-A- 0 890 738
- DE-A- 19 715 774
- FR-A- 2 775 022
- US-A- 4 437 442

## Beschreibung

### Stand der Technik

Die Erfindung betrifft ein Verfahren zur Steuerung einer Brennkraftmaschine gemäß dem Oberbegriff des unabhängigen Patentanspruchs.

Ein derartiges Verfahren ist bereits aus der DE-OS 197 15 774 bekannt. Dort wird ein Verfahren beschrieben, dass der Steuerung einer Brennkraftmaschine dient, wobei wenigstens eine Betriebsgröße, beispielsweise ein Zündwinkel eines oder mehrerer Zylinder oder die Luftzufuhr durch ein Stellelement gesteuert wird. Die Steuerung von Zündwinkel und Luftzufuhr erfolgt dabei auf der Basis von Momentenwerten, wobei die Einstellung des Zündwinkels nach Maßgabe vorgegebener Zündwinkelwirkungsgrade erfolgt. Die Zündwinkelwirkungsgrade werden im Sinne einer Aufrechterhaltung des Drehmoments der Brennkraftmaschine bei der Steuerung der Leerlaufluft berücksichtigt. Die Zündwinkelwirkungsgrade werden als Funktion von Betriebsparametern der Brennkraftmaschine wie Drehzahl und relative Zylinderfüllung bestimmt.Einer dieser Zündwinkelwirkungsgrade ist der Vorsteuerzündwinkelwirkungsgrad, der sicherstellt, dass eine Momentenänderung nur über den Zündwinkel realisiert wird. Führt eine Momentenanforderung über einen Grenzwert für einen Zündwinkel hinaus, wird die Luftzufuhr entsprechend verändert. Genauer stellt der Vorsteuerzündwinkelwirkungsgrad sicher, dass eine im Zündwinkelpfad vorgenommene Verschlechterung der Wirkungsgradeinstellung im Luftpfad dergestalt berücksichtigt wird, dass das über die Füllung eingestellte Moment sich genau um den Betrag verändert, um den sich das über den Zündwinkel eingestellte Moment verändert hat. Der Übergang zwischen bestimmten Betriebszuständen wird in dem in der DE-OS 197 15 774 beschriebenen Verfahren derart berücksichtigt, dass ein Vorgabezündwinkelwirkungsgrad auf nicht näher beschriebene Weise verändert wird. Dieser Vorgabezündwinkelwirkungsgrad wird mit einem Basiszündwinkelwirkungsgrad in einer Minimalwertauswahlstufe verglichen, wobei der jeweils kleinere Wert, d. h. der jeweils schlechtere Wirkungsgrad, als Vorsteuerzündwinkelwirkungsgrad ausgegeben wird. Dabei beschreibt der Basiszündwinkelwirkungsgrad einen Wirkungsgrad, der sich aus einem Zündwinkel der Brennkraftmaschine im aktuellen Arbeitspunkt ohne externen Eingriff und einem Zündwinkel mit dem höchsten Wirkungsgrad unter den aktuellen Betriebsbedingungen ergibt, wie dies in der DE-OS 197 15 774 angegeben ist.

### Vorteile der Erfindung

Das erfindungsgemäße Verfahren mit den Merkmalen des unabhängigen Anspruchs 1 hat dem gegenüber den Vorteil, dass der Übergang zwischen verschiedenen Betriebszuständen direkt bei der Berechnung des Vorsteuerzündwinkelwirkungsgrads berücksichtigt wird. Damit werden Zündwinkelsprünge, die sich aufgrund der Minimalwertbildung ergeben, wirksam verhindert.

Durch die in den Unteransprüchen aufgeführten Maßnahmen sind vorteilhafte Weiterbildungen des im Hauptanspruch angegebenen Verfahrens möglich. Besonders vorteilhaft ist, dass die Betriebszustände "Leerlauf" und "nicht Leerlauf" durch bestimmte Bereiche des Kupplungsmoment-Wertes berücksichtigt werden. Dabei ist es vorteilhaft, das Kupplungsmoment aus dem Motormoment und aus dem Verlustmoment zu berechnen, so dass im Leerlauf gerade die Verluste des Motors kompensiert werden.

Es ist weiterhin vorteilhaft, dass der Vorsteuerzündwinkelwirkungsgrad in unterschiedlichen Betriebszuständen direkt aus verschiedenen Kennfeldern gelesen wird, da dynamische Änderungen in Betriebsgrößen der Brennkraftmaschine besser berücksichtigt werden können. Dabei ist es von Vorteil, die Kennfelder als Funktion der relativen Zylinderfüllung und der Motordrehzahl zu adressieren.

### Zeichnung

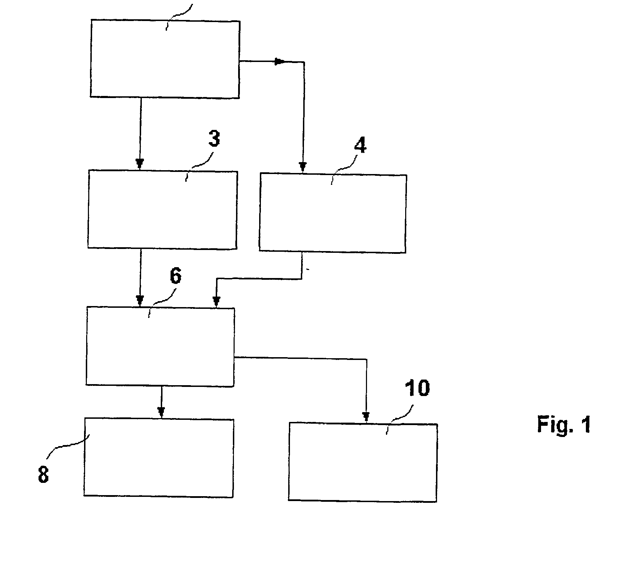

Die Erfindung wird nachstehend anhand der in der Zeichnung dargestellten Ausführungsform näher erläutert. Es zeigt Figur 1 das erfindungsgemäße Verfahren anhand eines Blockschaltbildes.

### Beschreibung von Ausführungsbeispielen

Figur 1 zeigt ein bevorzugtes Ausführungsbeispiel für ein Verfahren zur Steuerung einer Brennkraftmaschine. Die Blockschaltbilddarstellung repräsentiert die Struktur dieses Programms, wobei die einzelnen Blöcke die entsprechenden Programmteile, Kennlinien, Kennfelder, Tabellen etc. bezeichnen, während die Verbindungslinien das Zusammenwirken dieser Programmelemente darstellen.

In Schritt 2 wird geprüft, ob das Kupplungsmoment, dass sowohl einen Wert kleiner gleich oder größer 0 annehmen kann, größer als ein positiver Schwellwert ist. Das Kupplungsmoment setzt sich zusammen aus dem aktuellen Motormoment, von den das Verlustmoment subtrahiert wird. Dabei ist das Motormoment das Drehmoment, das der Motor im aktuellen Arbeitspunkt bereitstellt. Als Verlustmoment wird das Drehmoment bezeichnet, das der Motor aufwenden muß, um Reibungsverluste, Wärmeverluste und andere auftretende Verluste zu kompensieren. Ist das Kupplungsmoment größer als ein vorgegebener Schwellwert dann gelangt das Verfahren zu Schritt 3, andernfalls gelangt das Verfahren zu Schritt 4. In Schritt 3 wird aus einem Speicher ein Vorsteuerzündwinkelwirkungsgrad - Wert gelesen, der charakteristisch ist für den Betrieb der Brennkraftmaschine außerhalb des Leerlaufs.

In Schritt 4 wird aus einem Speicher ein Vorsteuerzündwinkelwirkungsgrad - Wert gelesen, der für den Berieb der Brennkraftmaschine im Leerlauf charakteristisch ist. Die Werte, die in Schritt 3 bzw. Schritt 4 aus einem Speicher gelesen werden, können auch abhängig von der Last und/oder der Drehzahl aus einem Kennfeld oder einer Kennlinie gelesen werden. Dabei unterscheiden sich die Kennlinien oder Felder in Schritt 3 von denen in Schritt 4, da sie unterschiedliche Betriebszustände repräsentieren. Die Kennlinie oder das Kennfeld in Schritt 4, d. h. für den Leerlauf, kann auch aus dem Kennfeld von Schritt 3 berechnet werden, in dem von einem zu einem Vorsteuerzündwinkelwirkungsgrad aus Schritt 3 zugehörigen Zündwinkel ein bestimmter, feststehender Zündwinkel abgezogen wird und sich dieser daraus ergebender Zündwinkel in einen zugehörigen Vorsteuerzündwinkelwirkungsgrad umgerechnet wird. Somit besitzt der Vorsteuerzündwinkelwirkungsgrad unterschiedliche Werte für unterschiedliche Betriebszustände. Anschließend wird das Verfahren mit Schritt 6 fortgeführt. Dort wird geprüft, ob in einem vorgegebenen Zeitraum ein Übergang von einem ersten Betriebszustand zu einem zweiten Betriebszustand stattgefunden hat. Wenn dies der Fall ist, dann wird das Verfahren mit Schritt 8 fortgesetzt, andernfalls gelangt das Verfahren zu Schritt 10.

In Schritt 8 wird der in Schritt 3 bzw. Schritt 4 erhaltene Vorsteuerzündwinkelwirkungsgrad mit einer Übergangsfunktion variiert. Diese Übergangsfunktion stellt sicher, dass der Übergang von einem ersten Betriebszustand zu einem zweiten Betriebszustand allmählich erfolgt und somit keine Zündwinkel- bzw. Momentensprünge auftreten. Eine derartige Übergangsfunktion kann sich beispielsweise aus dem Vorsteuerzündwinkelwirkungsgrad des vorangegangenen Zyklus' ergeben, der in Richtung des aktuellen, zu einem neuen Betriebszustand gehörenden Vorsteuerzündwinkelwirkungsgrads extrapoliert wird.

In Schritt 10 wird, da über einen bestimmten Zeitraum ein Übergang von einem ersten Betriebszustand in einen zweiten Betriebszustand nicht stattgefunden hat, der in Schritt 3 oder 4 berechnete Vorsteuerzündwinkelwirkungsgrad nicht verändert. Der Vorsteuerzündwinkelwirkungsgrad wird anschließend, analog zu der in der DE 19715774 beschriebenen Vorgehensweise weiterverarbeitet und daraus der Zündwinkel bzw. die Stellung des Stellelements für die Luftzufuhr berechnet.

In einem weiteren Ausführungsbeispiel ist es außerdem möglich, in Schritt 2 zusätzlich zu dem Kupplungsmoment ein Leerlaufbit dahingehend zu untersuchen, ob dieses gesetzt ist oder nicht. Das Leerlaufbit ist dann gesetzt, also high, wenn die Drosselklappe geschlossen ist. Ist die Drosselklappe geschlossen, dann gelangt das Verfahren zu Schritt 4, andernfalls gelangt das Verfahren zu Schritt 3. Die beiden Bedingungen Kupplungsmoment bzw. Leerlaufbit können dabei mit einer Und- oder einer Oder-Verknüpfung versehen sein. Die folgenden Schritte 3 bis 10 werden in diesem Ausführungsbeispiel analog zu dem vorher geschilderten Ausführungsbeispiel bearbeitet.

Analoge Ausführungsbeispiele lassen sich auch zu anderen Betriebszuständen der Brennkraftmaschine, beispielsweise für den Betriebszustand Teillast, realisieren. Mit den erfindungsgemäßen Verfahren ist sichergestellt, dass ein weicher Übergang zwischen verschiedenen Betriebszuständen in einer zentralen Größe, dem Vorsteuerzündwinkelwirkungsgrad, berücksichtigt wird, und somit Momenten- bzw. Zündwinkelsprünge vermieden werden.

## Patentansprüche

1. Verfahren zur Steuerung einer Brennkraftmaschine, bei welchem wenigstens eine Betriebsgröße der Brennkraftmaschine gesteuert wird, wobei ein Vorsteuerzündwinkelwirkungsgrad abhängig von Betriebsparametern der Brennkraftmaschine und/oder externen Eingriffen gebildet wird, der die Sollwerte der wenigstens einen Betriebsgröße bestimmt, **dadurch gekennzeichnet, dass** bei einem Übergang von einem ersten Betriebszustand in einen zweiten Betriebszustand der Vorsteuerzündwinkelwirkungsgrad mittels einer Übergangsfunktion allmählich variiert wird.

2. Verfahren nach Anspruch 1 **dadurch gekennzeichnet, dass** sich der erste Betriebszustand durch ein Kupplungsmoment kleiner oder gleich Null und der zweite Betriebszustand durch ein Kupplungsmoment größer als Null auszeichnet.

3. Verfahren nach Anspruch 2 **dadurch gekennzeichnet, dass** sich das Kupplungsmoment sich aus dem Motormoment ergibt von dem ein Verlustmoment subtrahiert wird.

4. Verfahren nach Anspruch 1 **dadurch gekennzeichnet, dass** im ersten Betriebszustand der Vorsteuerzündwinkelwirkungsgrad aus einem ersten Kennfeld und im zweiten Betriebszustand der Vorsteuerzündwinkelwirkungsgrad aus einem zweiten Kennfeld gelesen wird.

5. Verfahren nach Anspruch 4 **dadurch gekennzeichnet, dass** das erste Kennfeld und das zweite Kennfeld mit der relativen Zylinderfüllung und der Motordrehzahl adressiert werden.

## Claims

1. Method for controlling an internal combustion engine in which at least one operating variable of the internal combustion engine is controlled, a pilot ignition angle efficiency being established as a function of operating parameters of the internal combustion engine and/or external interventions, said efficiency determining target values for the at least one operating variable, **characterized in that**, in the event of a transition from a first operating state to a second operating state, the pilot ignition angle efficiency is varied gradually by means of a transition function.

2. Method according to Claim 1, **characterized in that** the first operating state is distinguished by a coupling torque of less than or equal to zero and the second operating state is distinguished by a coupling torque of greater than zero.

3. Method according to Claim 2, **characterized in that** the coupling torque is obtained by subtracting a loss torque from the engine torque.

4. Method according to Claim 1, **characterized in that**, in the first operating state, the pilot ignition angle efficiency is read from a first map and, in the second operating state, the pilot ignition angle efficiency is read from a second map.

5. Method according to Claim 4, **characterized in that** the first and the second maps are addressed with the relative cylinder.charge and the engine speed.

## Revendications

1. Procédé de gestion d'un moteur à combustion interne, selon lequel on commande au moins une grandeur de fonctionnement du moteur à combustion interne en formant en fonction de paramètres de fonctionnement du moteur à combustion interne et/ou d'interventions externes un rendement d'angle d'allumage pilote déterminant les valeurs de consigne de l'au moins une grandeur de fonctionnement,
**caractérisé en ce que**
lors d'une transition entre un premier mode de fonctionnement et un deuxième mode de fonctionnement, on modifie progressivement le rendement d'angle d'allumage pilote au moyen d'une fonction de transition.

2. Procédé selon la revendication 1,
**caractérisé en ce que**
le premier état de fonctionnement se **caractérise par** un couple d'embrayage inférieur ou égal à zéro et le deuxième état de fonctionnement se **caractérise par** un couple d'embrayage supérieur à zéro.

3. Procédé selon la revendication 2,
**caractérisé en ce que**
le couple d'embrayage résulte du couple moteur auquel est soustrait un couple de perte.

4. Procédé selon la revendication 1,
**caractérisé en ce que**
dans le premier état de fonctionnement, on lit le rendement d'angle d'allumage pilote à partir d'un premier champ de caractéristiques et dans le deuxième état de fonctionnement, on lit le rendement d'angle d'allumage pilote à partir d'un deuxième champ de caractéristiques.

5. Procédé selon la revendication 4,
**caractérisé en ce que**
le premier et le deuxième champs de caractéristiques sont adressés avec le remplissage de cylindre relatif et le régime moteur.
